Europäisches Patentamt

European Patent Office

Office européen des brevets

(11) Publication number: **0 309 267**
**A1**

## EUROPEAN PATENT APPLICATION

(21) Application number: 88308848.6

(22) Date of filing: 23.09.88

(51) Int. Cl.⁴: **F 02 C 3/20**
F 01 K 23/06, F 23 C 6/04

(30) Priority: 25.09.87 GB 8722651

(43) Date of publication of application:
29.03.89 Bulletin 89/13

(84) Designated Contracting States:
BE DE ES FR GB IT NL

(71) Applicant: British Gas plc
Rivermill House 152 Grosvenor Road
London SW1V 3JL (GB)

(72) Inventor: Gibson, Greville Hedley
62 Purley Downs Road
Purley Surrey CR2 0RA (GB)

Starr, Frederick
51 Pollards Hill North
London SW16 4NJ (GB)

(54) Heat exchanger processes.

(57) A hydrocarbon or synthesis gas type fuel is combusted with a substoichiometric amount of oxygen to produce a substantially non-oxidising gaseous mixture having a temperature of 1400 to 2800°C at a pressure of 1 to 100 bar which is used to heat a working fluid or chemical process fluid by means of a heat exchanger 6 in which the heat transfer surface are made of a refractory metal or alloy such as molybdenum.

The heated working fluid may be used to drive a gas turbine 7 and heat steam via heat exchanger 10 to drive a steam turbine 14 in a combined cycle electrical power generation system.

EP 0 309 267 A1

## Description

### HEAT EXCHANGER PROCESSES

The present invention relates to the heating of working and chemical process fluids and to energy producing and chemical processes which involve the heating of such fluids.

In known power stations fuel is burned under boilers to produce steam at pressure which is then expanded in a steam turbine which in turn drives an electrical generator. As with all processes in which heat converted into work, the thermal efficiency of a steam turbine is a function of the temperature of the working or process fluid entering and leaving the heat engine according to the expression:-

$$\text{Efficiency} = f \frac{(1-T_{OUT})}{(T_{IN})}$$

Improvements in the thermal efficiency can be achieved by increasing the value of $T_{IN}$ and/or reducing the value of $T_{OUT}$.

The use of heated gases to drive gas turbines in power generation is one way of increasing $T_{IN}$, that is the inlet temperature to the heat engine, and so increasing the thermal efficiency. However, a higher outlet temperature from the gas turbine ($T_{OUT}$) of around 500°C serves to reduce much of the efficiency gain resulting from the higher inlet temperature. Constructional material considerations for known industrial gas turbines mean that the temperature of the heated gases, such as combustion gases, entering the turbine should not exceed about 1100°C. Excessively high temperatures are avoided by using air/fuel ratios of the order of 3 to 4 times the stoichiometric requirement for complete combustion of the fuel. However, the "back work" needed to drive an air compressor to provide the excess air requirement is large and may exceed 50% of the total power output.

A combination of gas turbine and steam turbine cycles (combined cycle power generation) allows advantage to be taken of the relatively high turbine entry temperature possible with gas turbines and the relatively low temperature of steam at the outlet of the steam turbine. However, there is still the problem of providing the large excess of air to keep the gas turbine entry temperature from exceeding about 1100°C. Also, around 20% of the energy input in the form of fuel to the combined cycle may be lost as sensible and latent heat in the flue gases.

An object of the present invention is to provide a process which enables higher temperatures available from the combustion of fuel to be utilised for the heating of working fluids.

From one aspect, the present invention comprises a process for heating a working fluid or chemical process fluid wherein a hydrocarbon or synthesis gas type fuel is combusted with a substoichiometric amount of oxygen resulting in a substantially non-oxidising gaseous mixture of unreacted material and combustion products which indirectly transfers heat to the working fluid or chemical process fluid in a heat exchanger characterised in that the amount of oxygen employed sufficient for the combustion of the fuel, for example in the exchanger, results in the substantially non-oxidising gaseous mixture having a temperature of 1400 to 2800°C at a pressure of 1.0 to 100 bar and characterized in that the heat transfer surfaces of the heat exchanger are made of a refractory metal or refractory metal alloy as hereinafter defined.

From another aspect, an electricity producing process comprises partially combusting in a reactor hydrocarbon or synthesis gas type fuel using a substoichiometric amount of oxygen resulting in a substantially non-oxidising gaseous mixture of unreacted material and combustion products, directing said gaseous mixture at a temperature of 1400 to 2800°C and at a pressure of 1.0 to 100 bar into a first indirect heat exchanger in which the heat transfer surfaces are made of a refractory metal or refractory metal alloy as hereinafter defined, thereby indirectly heating to a temperature of 500 to 1600°C a first working fluid which is operating in a closed-fluid cycle system, directing the heated working fluid at a temperature of 500°C to 1600°C and at a pressure of 0.1 to 300 bar to an expansion turbine or turbines thereby driving the turbine or turbines which in turn drives an electricity generator.

In this specification a metal or metal alloy which exhibits refractory properties at a temperature of 500 to 1600°C and is able to contain pressures of 0.1 to 300 bar in a substantially non-oxidising atmosphere is referred to as a refractory metal or a refractory metal alloy and include ones which have a low oxide stability. Examples of such refractory metals are those on which substantially protective oxides form under substoichiometric air to fuel burning conditions, for example, molybdenum, iron, nickel and colbalt or alloys of the same. Examples of such refractory metal alloys are nickel-molybdenum alloy or dispersion hardened alloys which require substoichiometric air to fuel burning conditions to prevent significant oxidation.

Conveniently, the first working fluid exiting from the first heat exchanger is passed to a second indirect heat exchanger thereby indirectly to heat a second inert working fluid which operates in a second closed-fluid cycle. The heated second working fluid is then directed into a second expansion turbine to drive the turbine which in turn drives a second electricity generator. The second working fluid which exits from the second expansion turbine is returned to the second heat exchanger.

The or the first working fluid may be helium, argon or hydrogen or a stable gas mixture or a chemical process fluid, for example a mixture of hydrogen and methane which may subsequently be used in a chemical process. Such fluid is substantially non oxidising to refractory metals and alloys as herebefore defined. The second working fluid may be steam which drives a steam turbine. It will be appreciated that the working fluids should be substantially chemically inert with respect to the associated turbine materials as well as the heat exchanger materials.

Furthermore, partially reacted fuel in the combustion gas mixture exiting from the first heat exchanger may be subjected substantially to full combustion, the product gases being directed at a temperature of 400 to 1500°C and at a pressure of 1.5 to 100 bar to a further expansion turbine thereby to drive said turbine which in turn drives a further electricity generator.

Gases exiting from the further expansion turbine may be employed to heat fluid indirectly in the second closed-fluid cycle. Prior to the substantially full combusting stage, the unreacted fuel which has exited from the first heat exchanger may be further partially combusted at least once with a substoichiometric amount of oxygen.

The fuel used may be natural gas, or synthesis gas having as its major components, hydrogen, carbon monoxide and carbon dioxide, whilst the oxygen may be provided in the form of air. When the fuel is natural gas the preferred amount of oxygen employed for the initial partial combustion of fuel is 20 to 85 % by weight of the stoichiometric requirement.

Prior to the substantially non-oxidising gaseous mixture reaching the or the first heat exchanger, the unreacted fuel may be further partially combusted at least once with a further substoichiometric amount of oxygen.

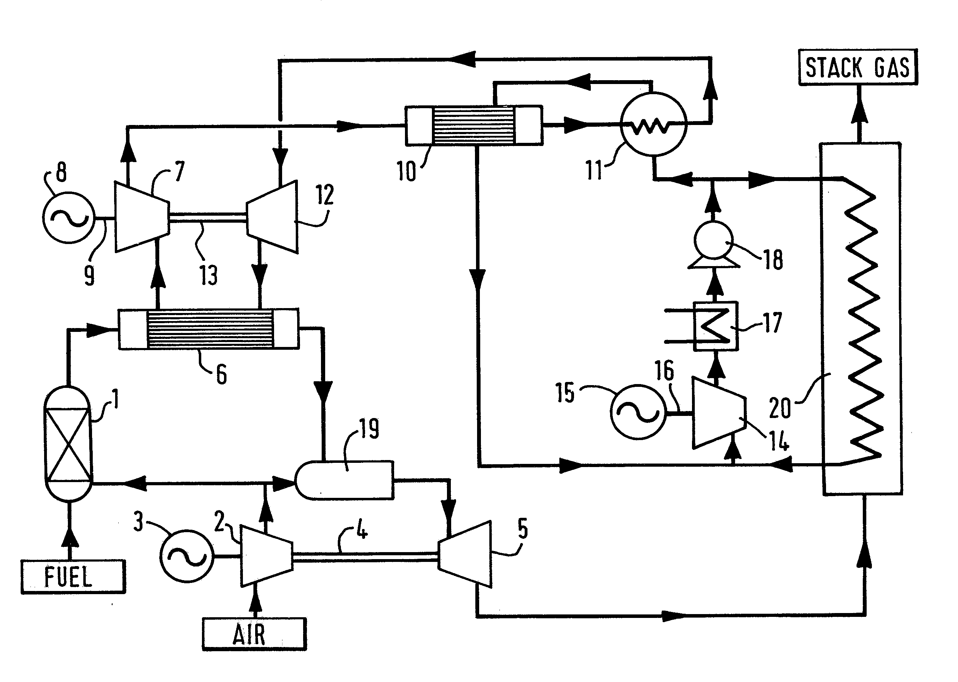

The present invention will now be described, by way of example, with reference to the accompanying drawing which shows in schematic form one embodiment of combined gas turbine/steam turbine plant operating a process according to the invention.

The plant comprises a reducing gas generator 1 in which natural gas or light hydrocarbon gas or synthesis gas, supplied for example from a coal gasifier (not shown), is partially combusted with less than the stoichiometric air requirement to achieve full combustion. The air for the partial combustion is supplied from an air compressor 2 which may be driven by an electric motor 3 or via a shaft 4 from a gas turbine 5 (to be described below).

Where natural gas is the fuel the quantity of air would be, for example, 70% of stoichiometric requirement so that the resulting non-oxidising gaseous mixture of unreacted fuel and combustion product gases would be about 1700°C. Since the major components of the product gases, apart from nitrogen and steam, are hydrogen and carbon monoxide the atmosphere generated is strongly reducing.

The above mentioned resulting gaseous mixture from the reducing gas generator 1 is directed into a heat exchanger 6, in which the components forming the heat exchange surfaces made of molybdenum, to heat indirectly a substantially non oxidising working fluid, which in this embodiment is helium, operating in a first closed-fluid cycle system which will now be described. The heat exchange process raises the temperature of the helium to about 1100°C, the pressure being in the range 15-300 bar.

The heated helium is directed into a gas expansion turbine 7 to operate the turbine which drives an electricity generator 8 via a shaft 9. Helium exits from the turbine 7 in an expanded state at a temperature of about 600°C and at a pressure of about 1-30 bars. Thereafter the expanded helium is passed to a second indirect heat exchanger 10 to heat a second inert working fluid, which in this embodiment is steam, operating in a second closed-fluid cycle to be described below.

Helium exits from the second heat exchanger 10 at a temperature of about 150°C and passes through a boiler feedwater heater 11, also to be described below. Helium emerges from the boiler feedwater heater 11 at a temperature of about 50°C whereafter it is compressed by a compressor 12 driven for example via a shaft 13 from the gas turbine 7. The compressed helium at a temperature of 300°C then passes to the molybdenum heat exchanger 6 to continue the first closed fluid cycle as before.

In the second closed fluid cycle, water/steam working fluid from the boiler feedwater heater 11 passes to the second heat exchanger 10 which functions as a steam generator by heating the water/steam to produce steam at a temperature of about 565°C. This heated steam is directed into and drives a steam turbine 14 which in turn drives an electricity generator 15 via a shaft 16. Expanded steam exiting form the steam turbine is condensed in a steam condenser 17 from which condensed water at a temperature of about 35°C is pumped by pump 18 back to the boiler feedwater heater 11 to continue the second closed fluid cycle as before.

Partially combusted fuel gas exits from the molybdenum heat exchanger 6 at a temperature of about 350°C and passes to a second reducing gas generator or combustion chamber 19 where partially reacted fuel is fully combusted with the required quantity of air, supplied from the air compressor 2 to bring the oxygen up to the stoichiometric amount. The combustion product gases exit from the combustion chamber 19 at a temperature of about 1100°C and pass directly to the gas turbine 5. Expanded low pressure gases emerge from the gas turbine 5 at a temperature of about 600°C and these are led away to a heat recovery steam generator 20 in which water supplied at about 35°C via the pump 18 is heated indirectly by the hot gases to produce steam at about 565°C which in turn is passed to the steam turbine 14. Thus the heat recovery resulting from the steam generator 20 is integrated with the heat recovery obtained via the heat exchanger 10. Gases which exit from the heat recovery generator 20 are led away as stack gases. If the heat content of the partially combusted gaseous mixture leaving the gas generator 1 is such that the complete combustion which would occur in combustion chamber 19 would result in product gas temperatures above those acceptable by the gas turbine 5, in this instance say above 1100°C, then prior to the gaseous mixture reaching the combustion chamber 19 the unreacted fuel is further partially combusted in one or more stages (not shown) with a substoichiometric amount of oxygen. Heat from such one or more further partial combustion stages may then be exchanged with a respective further working fluid operating in an associated closed-fluid cycle system(s) (not shown) similar to the first such closed-fluid cycle system described above. The subsequent partial combustion stages would be carried out until the complete combustion stage provides product gases at a temperature acceptable to the gas turbine 5.

Air for the final combustion stage in this embodiment represents less than about one third of the stoichiometric requirement and would correspond to about 10% of the normal air requirements in some known combined cycle power generating plants.

Whilst a particular embodiment of the invention has been described above, it will be understood that various modifications may be made without departing from the scope of the invention.

## Claims

1. A process for heating a working or chemical process fluid at a pressure of 0.1 - 300 bar and between 500 and 1600°C wherein a hydrocarbon or synthesis gas type fuel is combusted with a substoichiometric amount of oxygen resulting in a substantially non-oxidising gaseous mixture of unreacted material and combustion products which indirectly transfers heat to the working fluid or chemical process fluid in a heat exchanger, characterized in that the amount of oxygen employed is sufficient for the combustion of the fuel to result in the substantially non-oxidising gaseous mixture having a temperature of 1400 to 2800°C at a pressure of 1 to 100 bar and in that the heat transfer surfaces of the heat exchanger are made of a refractory metal or refractory metal alloy with low oxide stability as hereinbefore defined.

2. An electricity producing process comprising :-
- partially combusting in a reactor hydrocarbon or synthesis gas type fuel using a substoichiometric amount of oxygen resulting in a substantially non-oxidising gaseous mixture of unreacted material and combustion products,
- directing said gaseous mixture at a temperature of 1400 to 2800°C and at a pressure of 1.5 to 100 bar into a first indirect heat exchanger in which the heat transfer surfaces are made of a refractory metal or refractory metal alloy as hereinbefore defined, thereby indirectly heating to a temperature of 500 to 1600°C a first working fluid which is operating in a closed-fluid cycle system,
- directing the heated working fluid at a temperature of 500 to 1600°C and at a pressure of 0.1 to 300 bar to a first expansion turbine thereby driving the turbine which in turn drives an electricity generator, and
- returning the working fluid which exits from the turbine back to the heat exchanger.

3. A process as claimed in claim 2, in which first working fluid exiting from the first heat exchanger is passed to a second indirect heat exchanger thereby indirectly to heat a second working fluid which operates in a second closed-fluid cycle, directing the heated second working fluid into a second turbine to drive the turbine which in turn drives a second electricity generator, and returning the second working fluid which exits from the second expansion turbine back to the second heat exchanger.

4. A process as claimed in claim 3, in which the second working fluid is steam.

5. A process as claimed in claim 2, 3 or 4 in which unreacted fuel exiting in the gaseous mixture from the first heat exchanger is subjected substantially to full combustion and directing the product gases at a temperature of 400 to 1500°C and at a pressure of 1.5 to 100 bar to a further expansion turbine thereby driving said turbine which in turn drives a further electricity generator.

6. A process as claimed in claim 5, as dependent on claim 3 or claim 4, in which gases exiting from the further expansion turbine are employed to heat fluid indirectly in said second closed-fluid cycle.

7. A process as claimed in claim 5 or 6, in which prior to the substantially full combusting stage, the unreacted fuel which has exited from the first heat exchanger is further partially combusted at least once with a substoichiometric amount of oxygen.

8. A process as claimed in any of the preceding claims, in which prior to the substantially non-oxidising gaseous mixture reaching the or the first heat exchanger, the unreacted fuel is further partially combusted at least once with a substoichiometric amount of oxygen.

9. A process as claimed in any of the preceding claims, in which the heat transfer surface of the or the first heat exchanger are made of molybdenum.

10. A process as claimed in any of the preceding claims, in which the fuel is natural gas, light hydrocarbon gas, or synthesis gas.

11. A process as claimed in claim 10, in which the fuel is natural gas and the amount of oxygen employed is 20% to 85% of the stoichiometric amount.

12. A process as claimed in any of the preceding claims, in which the or the first working fluid is helium, argon or hydrogen or a stable mixture of such gases which is non oxidising to refractory metals.

13. A process as claimed in any of the preceding claims, in which the fuel is combusted with air.

14. A process substantially as hereinbefore described with reference to the accompanying drawing.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | GB-A-1 104 075 (INSTITUTE TEORETICHESKOI I PRIKLADNOI MEKHANIKI SIBIRSKOGO) <br> * Page 2, lines 3-34; figures * <br> --- | 1,2 | F 02 C 3/20 <br> F 01 K 23/06 <br> F 23 C 6/04 |
| A | DE-A-2 534 841 (ENERGIAGAZDALKODASI) <br> * Page 10, line 7 - page 11, line 22; figure 1 * <br> --- | 1,2,7,8 | |
| A | FR-A-2 163 673 (ENGELHARD) <br> * Page 4, line 19 - page 8, line 6; page 13, lines 5-21; figures * <br> --- | 1,2 | |
| A | EP-A-0 226 458 (INCO ALLOYS) <br> * Page 5, lines 19-34; figures * <br> --- | 1,2 | |
| A | US-A-3 971 211 (WETHE) <br> * Column 12, line 13 - column 14, line 36; figures * <br> --- | 3-6,10, 13 | |
| A | DE-C-3 509 357 (TCH) <br> --- | | TECHNICAL FIELDS SEARCHED (Int. Cl.4) |
| A | US-A-4 366 859 (KEYES) <br> ----- | | F 02 C <br> F 01 K <br> F 23 C <br> F 22 B <br> F 28 F |

The present search report has been drawn up for all claims

| Place of search | Date of completion of the search | Examiner |
|---|---|---|
| THE HAGUE | 29-11-1988 | VAN GHEEL J.U.M. |